# FASCICULE DE BREVET EUROPEEN

(11) **EP 4 184 258 B1**
(45) Date de publication et mention de la délivrance du brevet: **19.08.2026**
(21) Numéro de dépôt: 22207358.7
(22) Date de dépôt: 14.11.2022
(51) Int. Cl.: G05B 15/00, G06F 9/451

(54) **PROCEDE, DISPOSITIF ET PROGRAMME D'ORDINATEUR DE PROTOTYPAGE D'UN DISPOSITIF FONCTIONNEL**
VERFAHREN, VORRICHTUNG UND COMPUTERPROGRAMM ZUR PROTOTYPENERSTELLUNG EINER FUNKTIONSVORRICHTUNG
METHOD, DEVICE AND COMPUTER PROGRAM FOR PROTOTYPING A FUNCTIONAL DEVICE

(30) Priorité: 18.11.2021 FR 2112203
(43) Date de publication de la demande: 24.05.2023
(73) Titulaire: Interaction Design Sight & Lab, 75015 Paris (FR)
(72) Inventeur: GAUDRON, Nicolas, 75015 Paris (FR); CRUZ, Virginia, 33000 Bordeaux (FR)
(74) Mandataire: Casalonga

(56) Documents cités:
- US-A1- 2009 057 425
- MAASS ULRICH ET AL: "Heimautomatisierung mit fhem Heimautomatisierung mit fhem", 1 February 2014 (2014-02-01), pages 1 - 103, XP055935296, Retrieved from the Internet <URL:https://fhem.de/Heimautomatisierung-mit-fhem.pdf> [retrieved on 20220624]
- NORMANYO ERWIN ET AL: "Journal of Emerging Trends in Computing and Information Sciences Developing a Human Machine Interface (HMI) for Industrial Automated Systems using Siemens Simatic WinCC Flexible Advanced Software", 2 February 2014 (2014-02-02), pages 1 - 11, XP055935352, Retrieved from the Internet <URL:http://citeseerx.ist.psu.edu/viewdoc/download?doi=10.1.1.681.7586&rep=rep1&type=pdf> [retrieved on 20220624]
- ALBRITTON RICHARD: "Set up Home Assistant with a Raspberry Pi", 15 November 2021 (2021-11-15), pages 1 - 26, XP055935361, Retrieved from the Internet <URL:https://cdn-learn.adafruit.com/downloads/pdf/set-up-home-assistant-with-a-raspberry-pi.pdf> [retrieved on 20220624]

## Description

L'invention se rapporte au domaine du prototypage, par exemple du prototypage d'une interface homme-machine et/ou machine-machine, et plus précisément au prototypage d'un dispositif fonctionnel.

Le prototypage est une démarche qui consiste à réaliser un prototype d'un produit final. Il s'agit généralement d'un exemplaire incomplet et non définitif de ce que pourra être ce produit, pour valider une idée et/ou tester certaines caractéristiques afin de les améliorer, avant la production de ce produit. Selon la nature du produit et les raisons pour lesquelles il est fait recours au prototypage, ce dernier est plus ou moins compliqué à réaliser. Il existe de nombreuses technologies de prototypage comprenant notamment l'impression 3D, la réalité virtuelle et la réalité augmentée. La réalité virtuelle ou la réalité augmentée peut être utilisée pour permettre à un utilisateur de voir et manipuler virtuellement un produit complexe dans son environnement (virtuel ou réel), voire de l'étudier selon des points de vue impossibles réellement (par exemple voir le fonctionnement d'un moteur depuis l'intérieur).

Alors qu'un prototypage entièrement matériel, par exemple un produit réalisé par impression 3D, est très satisfaisant en ce qu'il permet de manipuler le produit, il offre des inconvénients, notamment en termes de coûts et d'interactivité dans la mesure où il est souvent difficile d'apporter de nombreuses modifications, en particulier de façon incrémentale. A l'inverse, le prototypage basé sur la réalité virtuelle permet de réduire les coûts et facilite une exploration du produit selon de très nombreuses variantes. Cependant, cette approche rend plus difficile l'appréhension d'un produit qui ne peut être manipulé physiquement.

Dans le domaine des interfaces homme-machine, le prototypage a essentiellement pour objet d'évaluer l'ergonomie de l'interface selon les besoins des utilisateurs et le contexte d'utilisation de l'interface. L'ergonomie, aussi appelée l'expérience utilisateur, est difficile à apprécier, d'autant plus en l'absence d'éléments matériels de l'interface, par exemple en l'absence de dispositifs de commande et/ou en l'absence d'effets physiques.

Les solutions permettant le prototypage d'interfaces homme-machine sont essentiellement des solutions basées sur la réalité virtuelle ou, comme les solutions permettant le prototypage d'interfaces machine-machine, des solutions spécifiques complexes à mettre en oeuvre du fait d'un niveau de programmation élevé requis.

Il existe donc un besoin pour une solution de prototypage générique et simple à mettre en oeuvre. L'art antérieur de Maaß Ulrich ET AL: "Heimautomatisierung mit fhem Heimautomatisierung mit fhem", publié le 01.02.2014, pages 1-103, Extrait de l'Internet:URL:https:// fhem.de/Heimautomatisierung-mit-fhem.pdf [extrait le 2022-06-24] est un manuel d'introduction à la domotique décrivant le système open-source "fhem", une plateforme logicielle permettant de configurer et contrôler des capteurs et actionneurs domestiques (lampes, volets, thermostats) via une interface web, avec des fonctionnalités de programmation d'événements et de personnalisation de l'affichage.

La présente invention vise notamment à résoudre ces problèmes.

### Exposé de l'invention

A cet effet, l'invention propose un procédé de prototypage fonctionnel d'un dispositif interactif dans un environnement comprenant au moins une unité de calcul, au moins un dispositif d'affichage et au moins un capteur, le procédé comprenant :
- pour ledit au moins un dispositif d'affichage,
   ∘ obtention d'une pluralité de structures logiques (ou containers), chaque structure logique comprenant un ensemble ordonné d'éléments, chaque élément comprenant un contenu multimédia et/ou un pointeur sélectionnant un autre élément ;
   ∘ association de chaque élément d'un ensemble d'éléments d'une structure logique à un état d'un ensemble d'états dudit au moins un capteur, la détection d'un état de l'ensemble d'états sélectionnant l'élément associé ;
- exécution du prototype fonctionnel en sélectionnant un élément d'une structure logique du au moins un dispositif d'affichage, la sélection d'un élément provoquant le jeu du contenu multimédia de l'élément sélectionné si l'élément sélectionné comprend un contenu multimédia et provoquant la sélection d'un élément pointé par l'élément sélectionné si l'élément sélectionné comprend un pointeur, un seul élément pouvant être sélectionné dans une structure logique à un instant donné ;
- après arrêt du prototype fonctionnel,
   ∘ répétition de l'étape d'association de chaque élément d'un ensemble d'éléments d'une structure logique à un état d'un ensemble d'états, dynamiquement et en fonction d'un besoin lié au prototype fonctionnel
      - en changeant l'ensemble d'éléments ou l'ensemble d'états et/ou
      - en modifiant un contenu multimédia d'un élément et/ou un pointeur d'un élément, ou l'ordre d'éléments d'au moins une structure logique et
   ∘ répétition de l'exécution du prototype fonctionnel.

Le procédé selon l'invention permet ainsi de simplifier le développement de prototypes d'interfaces homme-machine et/ou machine-machine et de simplifier les modifications et les évolutions de ces prototypes.

Selon des modes de réalisation particuliers, le procédé comprend en outre, pour ledit au moins un dispositif d'affichage, l'association d'au moins une action à au moins un élément, ladite au moins une action étant exécutée lors de la sélection dudit au moins un élément associé à ladite au moins une action.

Toujours selon des modes de réalisation particuliers, la au moins une action associée à au moins un élément est une commande d'au moins un actionneur.

Toujours selon des modes de réalisation particuliers, le procédé comprend en outre, pour ledit au moins un affichage, l'association de chaque élément d'un ensemble d'éléments d'une structure logique à un événement d'un ensemble d'événements, la détection d'un événement de l'ensemble d'événements sélectionnant l'élément associé. Dans un environnement comprenant une pluralité de dispositifs d'affichage, un même événement peut être associé à plusieurs éléments de structures logiques obtenues pour des dispositifs d'affichages distincts.

Toujours selon des modes de réalisation particuliers, le procédé comprend en outre, pour ledit au moins un dispositif d'affichage, l'association de plusieurs éléments d'une structure logique pour enchaîner automatiquement la sélection des éléments associés.

Toujours selon des modes de réalisation particuliers, chaque structure logique est associée à un niveau de profondeur, ladite pluralité de structures logiques comprenant une structure logique unique de niveau supérieur, le prototype fonctionnel étant exécuté en sélectionnant un élément de la structure logique de niveau supérieur du au moins un dispositif d'affichage. Lorsque des éléments de plusieurs structures logiques sont sélectionnés et qu'au moins certains des éléments sélectionnés comprennent un contenu multimédia, les contenus multimédias des éléments sélectionnés peuvent être combinés selon l'ordre de profondeur des structures logiques auxquelles appartiennent les éléments sélectionnés. De même, lors de l'exécution du prototype fonctionnel, des actions à exécuter peuvent être exécutées selon l'ordre de profondeur des structures logiques des éléments auxquels sont associées les actions à exécuter.

Toujours selon des modes de réalisation particuliers, ledit environnement comprend une pluralité de dispositifs d'affichage, au moins une structure logique obtenue pour un premier dispositif d'affichage ayant un même identifiant qu'au moins une structure logique obtenue pour un second dispositif d'affichage, la sélection d'un élément dans ladite au moins une structure logique obtenue pour ledit premier dispositif d'affichage provoquant la sélection d'un élément dans ladite au moins une structure logique obtenue pour ledit second dispositif d'affichage.

Toujours selon des modes de réalisation particuliers, le procédé comprend en outre la transmission, d'une unité de calcul associée audit premier dispositif d'affichage à une unité de calcul associée audit second dispositif d'affichage, d'une information relative audit élément sélectionné dans ladite au moins une structure logique obtenue pour ledit premier dispositif d'affichage.

L'invention propose également un dispositif comprenant une unité de traitement configurée pour exécuter chacune des étapes du procédé décrit précédemment.

Un programme informatique, mettant en oeuvre tout ou partie du procédé décrit ci-dessus, installé sur un équipement préexistant, est en lui-même avantageux, dès lors qu'il permet de simplifier le développement de prototypes d'interfaces homme-machine et/ou machine-machine et de simplifier les modifications et les évolutions de ces prototypes.

Ainsi, la présente invention vise également un programme informatique comportant des instructions pour la mise en oeuvre du procédé précédemment décrit, lorsque ce programme est exécuté par un processeur.

Ce programme peut utiliser n'importe quel langage de programmation (par exemple, un langage-objet ou autre) et être sous la forme d'un code source interprétable, d'un code partiellement compilé ou d'un code totalement compilé.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoires et à un module d'interface entrée/sortie, pour exécuter tout ou partie du procédé décrit ci-dessus.

### Brève description des dessins

D'autres caractéristiques, détails et avantages de l'invention apparaîtront à la lecture de la description détaillée ci-après. Celle-ci est purement illustrative et doit être lue en regard des dessins annexés, dans lesquels :
**Fig. 1**

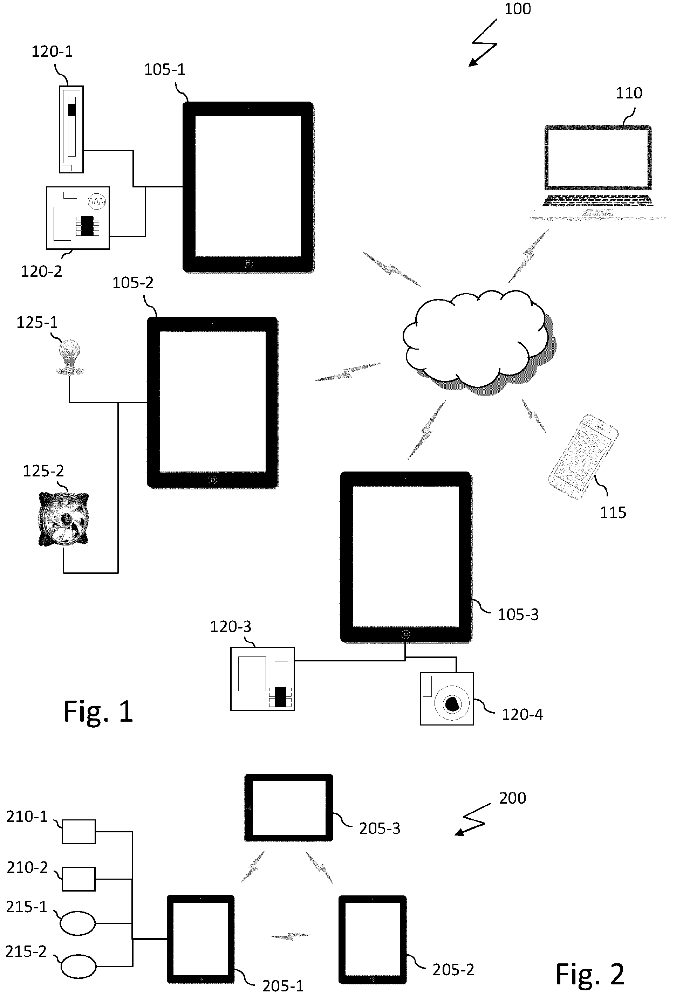

   [Fig. 1] illustre un premier exemple d'environnement dans lequel l'invention peut être mise en oeuvre selon des modes de réalisation particuliers ;
**Fig. 2**
   [Fig. 2] illustre un second exemple d'environnement dans lequel l'invention peut être mise en oeuvre selon des modes de réalisation particuliers ;
**Fig. 3**

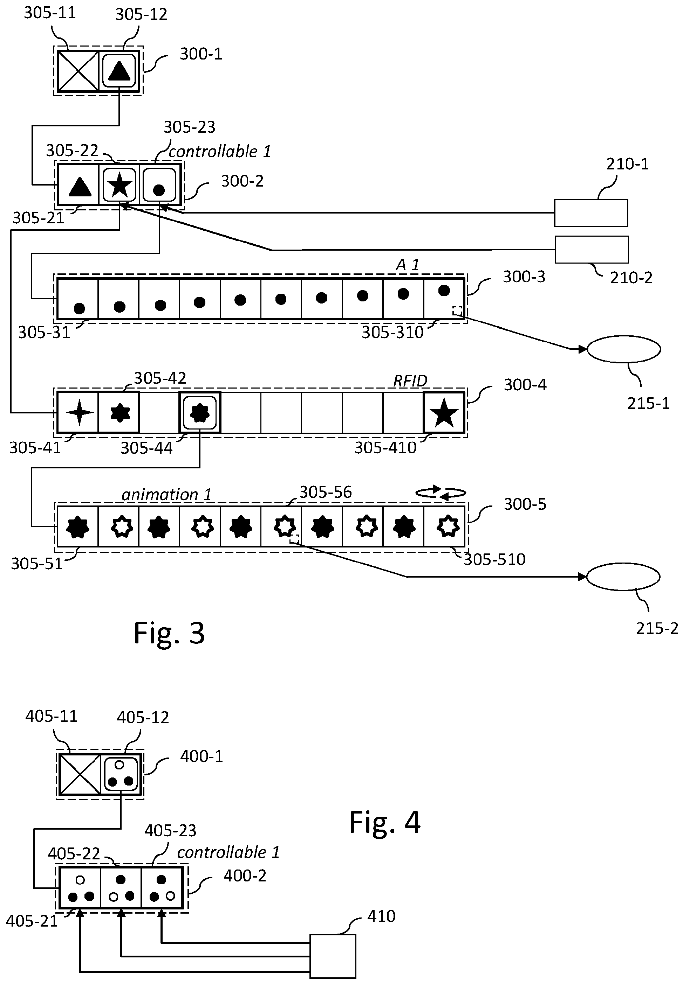

   [Fig. 3] illustre un exemple de containers associés à un dispositif d'affichage, ici au dispositif d'affichage 205-1 de la figure 2 ;
**Fig. 4**
   [Fig. 4] illustre un exemple de containers associés à un dispositif d'affichage, ici au dispositif d'affichage 205-2 de la figure 2 ;
**Fig. 5**

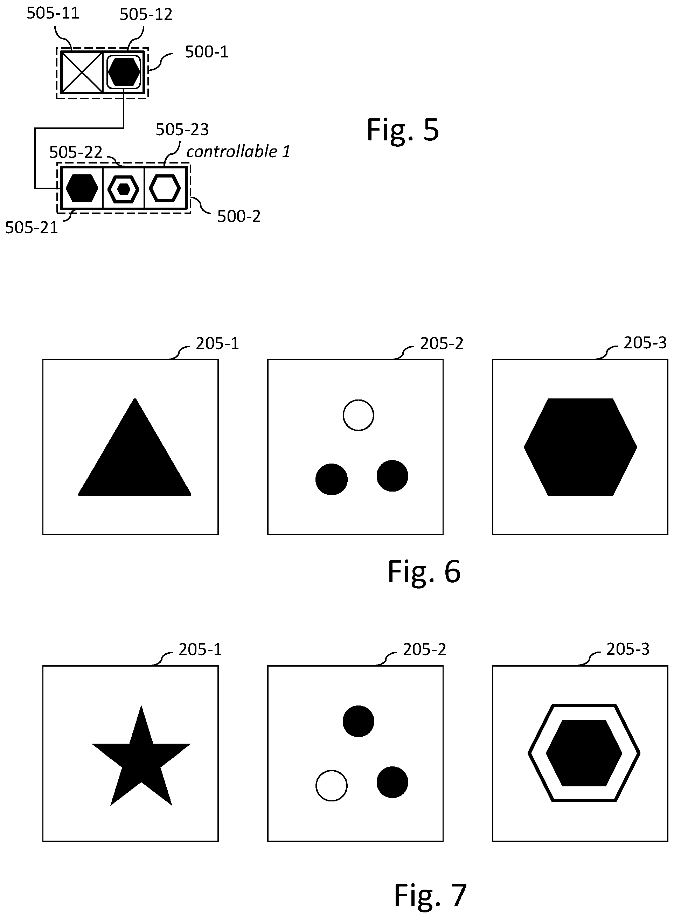

   [Fig. 5] illustre un exemple de containers associés à un dispositif d'affichage, ici au dispositif d'affichage 205-3 de la figure 2 ;
**Fig. 6**
   [Fig. 6] illustre l'affichage des dispositifs d'affichage 205-1, 205-2 et 205-3 de la figure 2 lorsque le prototype fonctionnel est lancé ;
**Fig. 7**
   [Fig. 7] illustre l'affichage des dispositifs d'affichage 205-1, 205-2 et 205-3 de la figure 2 après qu'un deuxième événement ait été détecté par le module 410 associé au dispositif d'affichage 205-2 ;
**Fig. 8**

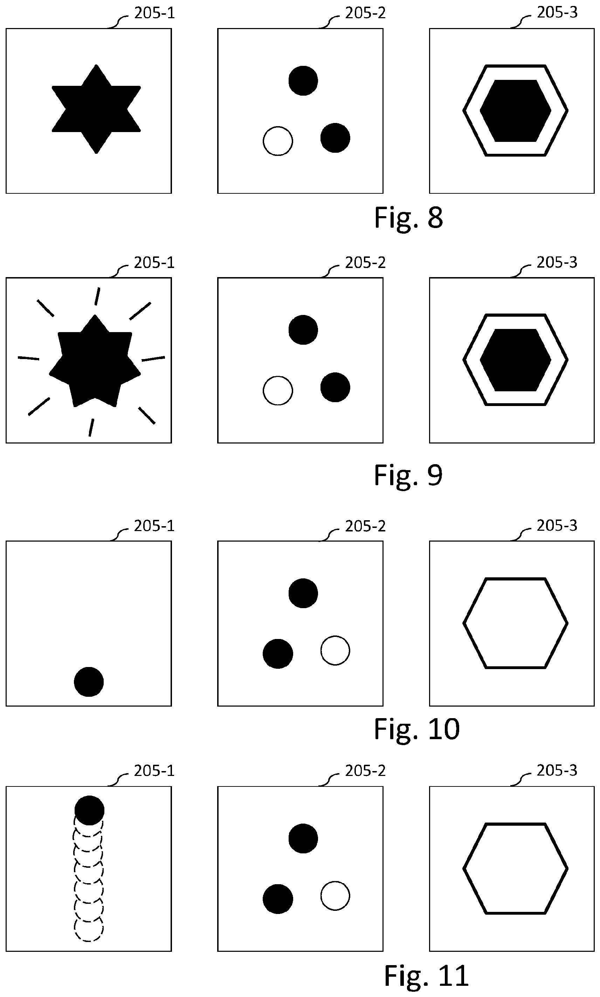

   [Fig. 8] illustre l'affichage des dispositifs d'affichage 205-1, 205-2 et 205-3 de la figure 2 après qu'une étiquette radiofréquence ayant l'identifiant 2 soit approchée du capteur 210-2 de type RFID associé au dispositif d'affichage 205-1 ;
**Fig. 9**
   [Fig. 9] illustre l'affichage des dispositifs d'affichage 205-1, 205-2 et 205-3 de la figure 2 après qu'une étiquette radiofréquence ayant l'identifiant 4 soit approchée du capteur 210-2 de type RFID associé au dispositif d'affichage 205-1 ;
**Fig. 10**
   [Fig. 10] illustre l'affichage des dispositifs d'affichage 205-1, 205-2 et 205-3 de la figure 2 après qu'un troisième événement ait été détecté par le module 410 associé au dispositif d'affichage 205-2 ;
**Fig. 11**
   [Fig. 11] illustre l'affichage des dispositifs d'affichage 205-1, 205-2 et 205-3 de la figure 2 lorsque le curseur du capteur 210-1 associé au dispositif d'affichage 205-1 est déplacé de sa position initiale à sa position finale ;
**Fig. 12a**

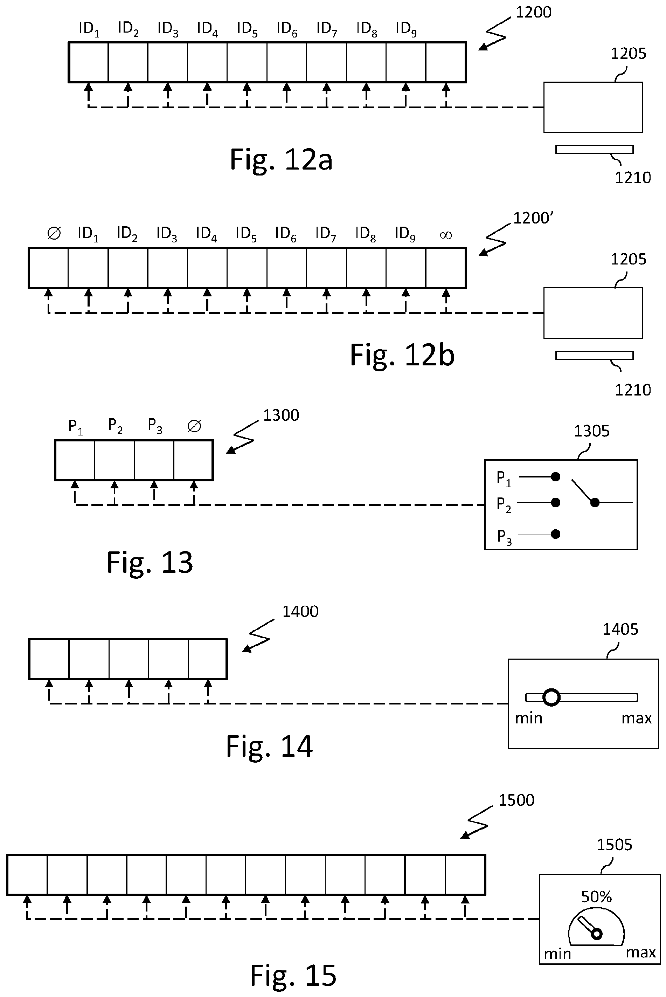

   [Fig. 12a] illustre un premier exemple de container associé à un capteur de type lecteur RFID ;
**Fig. 12b**
   [Fig. 12b] illustre un second exemple de container associé à un capteur de type lecteur RFID ;
**Fig. 13**
   [Fig. 13] illustre un exemple de container associé à un capteur de type commutateur ;
**Fig. 14**
   [Fig. 14] illustre un exemple de container associé à un capteur de type curseur linéaire dont la position varie d'une position initiale à une position finale ;
**Fig. 15**
   [Fig. 15] illustre un exemple de container associé à un capteur de type curseur rotatif dont la position varie d'une position initiale à une position finale ;
**Fig. 16**

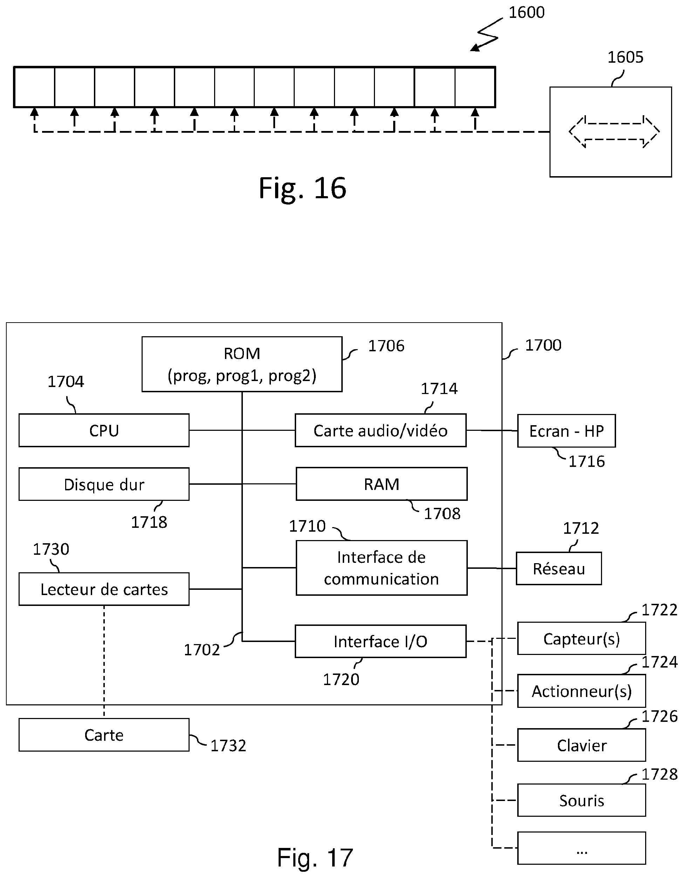

   [Fig. 16] illustre un exemple de container associé à un capteur tactile de type trackpad ou écran tactile permettant la détection d'un geste de type balayage ; et
**Fig. 17**
   [Fig. 17] illustre un exemple de module de traitement de données pouvant être utilisé pour mettre en oeuvre, au moins partiellement, des modes de réalisation de l'invention.

### Description détaillée

Selon des modes de réalisation particuliers de l'invention, un prototypage fonctionnel d'un dispositif interactif est réalisé dans un environnement comprenant un ou plusieurs dispositifs d'affichage associés à un ou plusieurs modules de traitement de données. Cet environnement comprend en outre, de préférence, un ou plusieurs capteurs et/ou un ou plusieurs actionneurs. Le comportement du prototype est avantageusement géré par dispositif d'affichage selon des structures logiques (ou structures de données), appelées containers. Chaque container comprend un ensemble ordonné d'éléments. Le nombre d'éléments par container peut être prédéterminé, variable et peut varier d'un container à un autre. Selon des modes de réalisation particuliers, le nombre d'éléments par container est ajusté dynamiquement selon les besoins. Ces éléments peuvent notamment comprendre un contenu multimédia et/ou un pointeur vers un autre élément de la même structure ou d'une structure différente. Le contenu multimédia peut être prédéterminé ou obtenu dynamiquement, par exemple d'une caméra et/ou d'un micro locaux ou distants. Ces éléments peuvent également comprendre une ou plusieurs actions, par exemple pour commander un ou plusieurs actionneurs. Des éléments d'un container peuvent en outre être associés à des états de capteurs de telle sorte que la détermination de l'état d'un capteur sélectionne un élément associé. De même, des éléments d'un container peuvent être associés à des événements de telle sorte que la détection d'un événement sélectionne un élément associé. Par ailleurs, les containers peuvent être identifiés par un identifiant, par exemple un nom (pouvant ou non comprendre une indication de type du container), notamment pour sélectionner des éléments de containers ayant le même nom, associés à des dispositifs d'affichage différents, comme décrit ci-dessous. La sélection d'un élément provoque le jeu du contenu multimédia de l'élément sélectionné si l'élément sélectionné comprend un contenu multimédia, provoque la sélection d'un élément pointé par l'élément sélectionné si l'élément sélectionné comprend un pointeur et commande un ou plusieurs actionneurs si l'élément sélectionné comprend une ou plusieurs actions. Selon des modes de réalisation particuliers, un seul élément peut être sélectionné dans un container à un instant donné.

Selon des modes de réalisation particuliers, le nombre d'éléments de chaque container est déterminé, de préférence dynamiquement, selon les besoins liés au prototypage visé, par exemple selon un nombre de contenus multimédias ou selon un nombre d'états liés à un capteur. Plusieurs types de containers peuvent être utilisés, notamment des containers à états, des containers automatiques et des containers qualifiés. Bien entendu, d'autres types de containers peuvent être mis en œuvre. Les containers à états sont ici des containers pour lesquels un utilisateur définit les états, en particulier les contenus multimédias, les actions et/ou les pointeurs des éléments, ainsi que la navigation ou l'enchaînement entre les éléments (un état correspond à toutes les données associées à un élément, c'est-à-dire notamment, un contenu multimédia, un ou plusieurs pointeurs et/ou une ou plusieurs actions). Les containers automatiques sont des containers pour lesquels un utilisateur définit les états, les états définis étant sélectionnés automatiquement les uns à la suite des autres, en boucle ou non, selon une fréquence (temps de pause associé à chaque élément) prédéterminée et de préférence paramétrable. Les containers qualifiés sont des containers pour lesquels un utilisateur définit les états, les états étant sélectionnés en fonction d'un état d'un capteur, d'un événement ou de tout autre paramètre extérieur.

A titre d'illustration, un container qualifié peut être un container associé à un capteur de type commutateur ayant quatre positions, selon lequel un premier élément du container est associé à un premier état du commutateur, un deuxième élément est associé à un deuxième état du capteur et ainsi de suite. De même, un container qualifié peut être un container associé à un capteur de type lecteur RFID (sigle de Radio Frequency Identification en terminologie anglo-saxonne), selon lequel un premier élément du container est associé à un premier identifiant d'étiquette radiofréquence obtenu par le capteur, un deuxième élément est associé à un deuxième identifiant d'étiquette radiofréquence obtenu par le capteur et ainsi de suite. Toujours à titre d'illustration, un container qualifié peut être un container associé à un capteur de type curseur ayant une première position, une position finale et des positions intermédiaires. Selon cet exemple, la première position du capteur permet la sélection d'un premier élément défini du container, la dernière position du capteur permet la sélection d'un dernier élément défini du container et chaque position intermédiaire du capteur permet la sélection d'un élément défini du container par interpolation (par exemple par une interpolation linéaire). Ce principe peut s'appliquer à de nombreux types de capteurs, par exemple des capteurs de son, de luminosité ou de proximité et des capteurs tactiles (permettant par exemple de reconnaitre des gestes de type glissement, pincement, etc.) pouvant produire en sortie une valeur minimale et une valeur maximale. Les figures 12 à 16 illustrent des exemples de tels containers qualifiés.

Toujours selon des modes de réalisation particuliers, des containers qualifiés peuvent comprendre un élément devant être sélectionné par défaut si aucun élément ne correspond à un état d'un capteur.

Selon des modes de réalisations particuliers encore, les containers associés à un dispositif d'affichage sont organisés par niveaux, par exemple d'un niveau inférieur à un niveau supérieur ou inversement, chaque niveau ne comprenant de préférence qu'un seul container. En outre, selon un mode de réalisation particulier, le contenu multimédia d'un élément d'un niveau supérieur qui pointe vers un élément de niveau inférieur se combine, le cas échéant, avec le contenu multimédia de l'élément pointé. Une telle combinaison peut consister, par exemple, en une addition pixel à pixel d'images ou en un masquage selon une logique de calques. Les niveaux peuvent également être utilisés pour déterminer un ordre d'exécution d'actions, par exemple d'un niveau inférieur à un niveau supérieur, si des éléments sélectionnés de différents niveaux sont chacun associés à une action. Bien entendu, la combinaison de contenus multimédia et/ou l'exécution d'actions peuvent être effectuées selon un ordre montant, un ordre descendant ou tout autre ordre, l'ordre étant déterminé en fonction du prototypage visé.

Il est observé ici qu'un élément pointé par un autre élément peut être un élément par défaut, par exemple le premier élément d'un container identifié dans l'élément qui contient le pointeur ou le premier élément du container de niveau immédiatement inférieur (ou supérieur) à celui comprenant l'élément qui contient le pointeur. Alternativement, l'élément pointé peut être un élément identifié dans l'élément comprenant le pointeur. Alternativement encore, l'élément pointé peut être un élément d'un container identifié dans l'élément comprenant le pointeur ou du container de niveau immédiatement inférieur (ou supérieur) à celui comprenant l'élément qui contient le pointeur, l'élément pointé étant en outre défini par un paramètre extérieur, par exemple un état d'un capteur ou un événement.

Ces containers et ces éléments peuvent être créés ou programmés à l'aide d'un logiciel tel que le logiciel de la société Adobe connu sous le nom de Animate (Adobe et Animate sont des marques).

**La** **figure 1** illustre un premier exemple d'environnement dans lequel l'invention peut être mise en oeuvre selon des modes de réalisation particuliers. Comme représenté, le système 100 comprend ici trois dispositifs d'affichage de type tablette, référencés 105-1 à 105-3, un ordinateur 110 de type PC (sigle de Personal Computer en terminologie anglo-saxonne) et un téléphone intelligent (ou smartphone) 115. Bien entendu, d'autres dispositifs d'affichage tels que des vidéoprojecteurs ou des écrans, notamment des écrans pliables, tactiles ou non, peuvent être utilisés. Selon l'exemple illustré, les dispositifs d'affichage peuvent communiquer entre eux, par exemple en utilisant un protocole de communication de données de type UDP (sigle de User Datagram Protocol en terminologie anglo-saxonne). Le canal de communication peut être filaire ou sans fil. Il peut, par exemple, utiliser un protocole de communication sans fil de type WiFi ou Bluetooth (WiFi et Bluetooth sont des marques). L'ordinateur 110 peut, par exemple, être utilisé pour programmer un prototype fonctionnel exécuté par les dispositifs d'affichage 105-1 à 105-3 et le smartphone 115. Bien entendu, l'environnement d'exécution du prototype fonctionnel n'est pas limité à quatre dispositifs d'affichage, il peut en comprendre un seul, deux, trois ou plus que quatre. Le prototype fonctionnel peut en outre être programmé et/ou contrôlé directement à l'aide des dispositifs d'affichage eux-mêmes. Toujours selon l'exemple illustré, un module de traitement de données ainsi qu'un module de communication sont intégrés à chaque dispositif d'affichage. Selon d'autres modes de réalisation, ces modules sont externes, locaux ou déportés, associés à un seul dispositif d'affichage ou commun à plusieurs dispositifs d'affichage.

Comme illustré, l'environnement dans lequel le prototype fonctionnel est exécuté comprend en outre plusieurs capteurs et plusieurs actionneurs. A titre d'illustration, cet environnement comprend ici un capteur de type curseur linéaire 120-1, par exemple un potentiomètre, et un capteur de lumière 120-2, connectés au dispositif d'affichage 105-1 par un lien filaire ou sans fil. Il comprend également un actionneur de type éclairage 125-1 ainsi qu'un actionneur de type ventilateur 125-2, associés (ou connectés) au dispositif d'affichage 105-2 par un lien filaire ou sans fil ainsi qu'un capteur de type curseur rotatif 120-4, par exemple un potentiomètre, et un lecteur d'étiquettes radiofréquences 120-3, par exemple un lecteur RFID, connectés au dispositif d'affichage 105-3 par un lien filaire ou sans fil. Bien entendu, de nombreuses autres configurations sont possibles. En particulier, un ou plusieurs capteurs et un ou plusieurs actionneurs peuvent être connectés à un même dispositif d'affichage. Il doit en outre être compris que de nombreux autres types de capteurs et d'actionneurs peuvent être utilisés. Il est également observé qu'un capteur et/ou un actionneur peuvent être associés à un dispositif d'affichage, mais interagir avec un autre dispositif d'affichage en utilisant des interfaces de communications appropriées et/ou en utilisant des mécanismes liés à des containers comme décrit ci-après.

Il est également observé ici que le prototype fonctionnel peut bénéficier de fonctionnalités de l'environnement dans lequel il est exécuté. Ainsi, par exemple, lorsque des contenus multimédias d'éléments de containers sont affichés, un utilisateur peut bénéficier de fonctionnalités propres au dispositif d'affichage, par exemple pour déplacer la fenêtre d'affichage d'un contenu multimédia, pour effectuer un zoom, etc. De telles fonctionnalités peuvent notamment être basées sur une interface tactile et être commandées par des gestes de type déplacement, pincement, étirement, etc. Ces fonctionnalités peuvent être accessibles par défaut ou explicitement. Dans ce dernier cas, l'accès peut être indiqué, par exemple, à l'aide d'une propriété associée à un container, par exemple à l'aide d'un ou plusieurs caractères prédéterminés insérés dans le nom du container (e.g. l'ajout de la lettre 'd' à la fin du nom d'un container peut indiquer que son contenu multimédia est 'draggable', c'est-à-dire qu'il peut être déplacé sur un écran).

**La** **figure 2** illustre un second exemple d'environnement dans lequel l'invention peut être mise en oeuvre selon des modes de réalisation particuliers. Selon cet exemple, l'environnement 200 comprend trois dispositifs d'affichage 205-1 à 205-3 comprenant chacun leur module de traitement de données et leur module de communication, ainsi que deux capteurs 210-1 et 210-2 et deux actionneurs 215-1 et 215-2, les capteurs et les actionneurs étant ici connectés au même dispositif d'affichage 205-1.

Comme décrit précédemment, un ensemble de containers est associé à chaque dispositif d'affichage, chaque container comprenant un ensemble ordonné d'éléments, chaque élément pouvant notamment comprendre un contenu multimédia, une ou plusieurs actions, par exemple des commandes d'actionneurs, et/ou un ou plusieurs pointeurs vers d'autres éléments, un seul élément d'un container pouvant être sélectionné à un instant donné. Par ailleurs, chaque élément d'un container peut être associé à un événement et/ou à un état d'un capteur, l'élément étant sélectionné lorsque l'état correspondant ou l'événement correspondant est détecté.

**La** **figure 3** illustre un exemple de containers associés à un dispositif d'affichage, ici au dispositif d'affichage 205-1 de la figure 2. Selon cet exemple, cinq containers 300-1 à 300-5 sont associés au dispositif d'affichage 205-1, le container 300-1 comprenant deux éléments, le container 300-2 comprenant trois éléments et les containers 300-3, 300-4 et 300-5 comprenant chacun dix éléments, étant observé que seuls quatre éléments sont utilisés dans le container 300-4.

Selon l'exemple illustré, les containers sont organisés par niveaux, d'un niveau supérieur à un niveau inférieur, chaque niveau ne comprenant qu'un seul container. Ainsi, le container 300-1 est le container de niveau le plus élevé et le container 300-5 est le container du niveau le plus bas. En outre, le contenu multimédia d'un élément d'un niveau supérieur qui pointe vers un élément de niveau inférieur se combine ici, le cas échéant, avec le contenu multimédia de l'élément pointé. Ainsi, par exemple, le contenu multimédia de l'élément 305-12 du container 300-1, élément qui pointe ici sur le premier élément du container 300-2, c'est-à-dire sur l'élément 305-21, se combine avec le contenu multimédia de ce dernier. Il s'agit, par exemple, d'une addition pixel à pixel des images. De même, le contenu multimédia de l'élément 305-22, élément qui pointe sur un élément du container 300-4, défini selon l'état d'un capteur associé, ici le capteur 210-2, se combine avec le contenu multimédia de l'élément sélectionné de ce container.

L'élément 305-11 est ici un élément d'entrée utilisé pour l'initialisation du dispositif d'affichage associé, par exemple pour initialiser les protocoles de communication utilisés pour communiquer avec d'autres dispositifs d'affichage et/ou avec des serveurs, initialiser les ports d'entrée/sortie utilisés pour recevoir des données de capteurs et adresser des commandes à des actionneurs, etc. Suite à l'initialisation du dispositif d'affichage associé, l'élément suivant l'élément d'entrée est sélectionné, c'est-à-dire l'élément 305-12.

Comme illustré, l'élément 305-12 pointe sur le premier élément (défini ici par défaut) du container 300-2, c'est-à-dire l'élément 305-21, l'élément 305-22 pointe sur un élément du container 300-4, défini selon un état déterminé par le capteur 210-2, l'élément 305-23 pointe sur un élément du container 300-3, défini selon un état déterminé par le capteur 210-1, et l'élément 305-44 pointe sur le premier élément (défini ici par défaut) du container 300-5, c'est-à-dire l'élément 305-51. Comme illustré également, le capteur 210-1 est associé à l'élément 305-23 qui pointe vers le container 300-3. Ce capteur est ici un capteur (physique ou tactile) de type curseur dont une position initiale correspond au premier élément du container pointé, c'est dire ici l'élément 305-31, et une position finale correspond au dernier élément du container pointé, c'est-à-dire ici l'élément 305-310. Ainsi, selon la position du curseur, l'un des éléments 305-31 à 305-310 est sélectionné. De même, le capteur 210-2, par exemple de type lecteur RFID, est ici associé à l'élément 305-22 qui pointe sur le container 300-4 dont des éléments sont associés à des identifiants d'étiquettes radiofréquences particulières, l'élément 305-410 étant associé à un état par défaut, lorsqu'aucune étiquette n'est à proximité du lecteur. En outre, une action est associée à l'élément 305-310 qui commande l'actionneur 215-1 lorsque cet élément est sélectionné. Cette commande peut, par exemple, être de type bascule (pour changer l'état de l'actionneur), de type marche/arrêt pour actionner l'actionneur tant que l'élément est sélectionné ou à états (pour placer l'actionneur dans un état particulier). De même, une action est associée à l'élément 305-56 qui commande l'actionneur 215-2 lorsque cet élément est sélectionné. A nouveau, cette commande peut, par exemple, être de type bascule ou de type marche/arrêt. Toujours selon l'exemple illustré, le container 300-5 est à changement d'état automatique, passant en boucle d'un élément au suivant, selon une fréquence particulière, de préférence paramétrable. Alternativement, il pourrait s'arrêter sur le dernier élément du container.

Comme illustré, les containers 300-2 à 300-5 sont identifiés par les identifiants « controllable 1 » (container à état), « A 1 » (container qualifié), « RFID » (container qualifié) et « animation 1 » (container automatique), respectivement.

**La** **figure 4** illustre un exemple de containers associés à un dispositif d'affichage, ici au dispositif d'affichage 205-2 de la figure 2. Selon cet exemple, deux containers 400-1 et 400-2 sont associés au dispositif d'affichage 205-2, ces containers comprenant respectivement deux et trois éléments.

Selon l'exemple illustré, chacun des éléments 405-21 à 405-23 est sélectionné par un événement déclencheur, l'événement étant ici identifié dans le module 410. Ainsi, l'élément 405-21 est sélectionné par l'identification d'un premier événement, l'élément 405-22 est sélectionné par l'identification d'un second événement et l'élément 405-23 est sélectionné par l'identification d'un troisième événement. Le module 410 est par exemple un bouton logique représenté sur un écran tactile, ce bouton pouvant être de type bascule, pour passer à un état suivant à chaque impulsion, ou de type marche/arrêt, un état étant sélectionné par une activation continue du bouton.

Comme illustré, le container 400-2 est identifié par l'identifiant « controllable 1 », comme le container 300-2 associé au dispositif d'affichage 205-1. Ainsi, du fait de l'identifiant commun, la sélection du i^{ème} élément du container 300-2 (i.e. l'élément 305-2i) sélectionne le i^{ème} élément du container 400-2 (i.e. l'élément 405-2i) et réciproquement.

L'élément 405-11 est ici un élément d'entrée utilisé pour l'initialisation du dispositif d'affichage associé. Suite à l'initialisation du dispositif d'affichage associé, l'élément suivant l'élément d'entrée est sélectionné, c'est-à-dire l'élément 405-12, qui pointe sur un élément du container 400-2, cet élément étant défini selon un événement identifié dans le module 410 comme décrit ci-dessus.

La **figure 5** illustre un exemple de containers associés à un dispositif d'affichage, ici au dispositif d'affichage 205-3 de la figure 2. Selon cet exemple, deux containers 500-1 et 500-2 sont associés au dispositif d'affichage 205-3, ces containers comprenant respectivement deux et trois éléments.

Comme illustré, le container 500-2 est identifié par l'identifiant « controllable 1 », comme les containers 300-2 associés au dispositif d'affichage 205-1 et 400-2 associé au dispositif d'affichage 205-2. Ainsi, du fait de l'identifiant commun, la sélection du i^{ème} élément du container 300-2 (i.e. l'élément 305-2i) ou du i^{ème} élément du container 400-2 (i.e. l'élément 405-2i) sélectionne le i^{ème} élément du container 500-2 (i.e. l'élément 505-2i) et réciproquement.

L'élément 505-11 est ici un élément d'entrée utilisé pour l'initialisation du dispositif d'affichage associé. Suite à cette initialisation, l'élément suivant l'élément d'entrée est sélectionné, c'est-à-dire l'élément 505-12 qui pointe sur un élément du container 500-2, cet élément étant défini selon un événement identifié dans le module 410 comme décrit ci-dessus.

Les figures 6 à 11 illustrent un exemple de l'affichage des dispositifs d'affichage 205-1, 205-2 et 205-3.

La **figure 6** illustre l'affichage des dispositifs d'affichage 205-1, 205-2 et 205-3 de la figure 2 lorsque le prototype fonctionnel est lancé. Après initialisation (i.e. la sélection des éléments d'entrée 305-11, 405-11 et 505-11), les éléments 305-12, 405-12 et 505-12 sont sélectionnés. Ces éléments pointant sur les éléments 305-21, 405-21 et 505-21, respectivement, le contenu multimédia de l'élément 305-12 est combiné avec celui de l'élément 305-21 pour être affichés sur le dispositif d'affichage 205-1, le contenu multimédia de l'élément 405-12 est combiné avec celui de l'élément 405-21 pour être affiché sur le dispositif d'affichage 205-2 et le contenu multimédia de l'élément 505-12 est combiné avec celui de l'élément 505-21 pour être affiché sur le dispositif d'affichage 205-3. Il est supposé ici que le contenu multimédia des éléments 305-12, 405-12 et 505-12 est vide, par conséquent, c'est le contenu multimédia des éléments 305-21, 405-21 et 505-21 qui est affiché.

La **figure 7** illustre l'affichage des dispositifs d'affichage 205-1, 205-2 et 205-3 de la figure 2 après qu'un deuxième événement ait été détecté par le module 410 associé au dispositif d'affichage 205-2. Comme décrit précédemment, le deuxième événement est associé à l'élément 405-22 du container 400-2. Le dispositif d'affichage 205-2 affiche donc le contenu multimédia de l'élément 405-22. Par ailleurs, le container 400-2 ayant le même identifiant que les containers 300-2 et 500-2, les éléments 305-22 et 505-22 sont également sélectionnés. L'élément 305-22 étant associé à l'état du capteur 210-2, cet état est déterminé. Il est supposé ici qu'aucune étiquette radiofréquence n'est à proximité du capteur 210-2 de type lecteur RFID par conséquent, l'élément 305-410 (élément par défaut) est sélectionné. Le contenu multimédia de l'élément 305-410 est donc affiché par le dispositif d'affichage 205-1. Par ailleurs, l'élément 505-22 étant sélectionné, le contenu multimédia de cet élément est affiché par le dispositif d'affichage 205-3.

La **figure 8** illustre l'affichage des dispositifs d'affichage 205-1, 205-2 et 205-3 de la figure 2 après qu'une étiquette radiofréquence ayant l'identifiant 2 soit approchée du capteur 210-2 de type RFID associé au dispositif d'affichage 205-1. En supposant que l'identifiant 2 du capteur 210-2 soit associé au deuxième élément du container 300-4, c'est-à-dire à l'élément 305-42, ce dernier est sélectionné. Le dispositif d'affichage 205-1 affiche donc le contenu multimédia de l'élément 305-42. L'élément 305-22 étant toujours sélectionné, l'affichage des dispositifs d'affichage 205-2 et 205-3 ne change pas.

La **figure .9** illustre l'affichage des dispositifs d'affichage 205-1, 205-2 et 205-3 de la figure 2 après qu'une étiquette radiofréquence ayant l'identifiant 4 soit approchée du capteur 210-2 de type RFID associé au dispositif d'affichage 205-1. En supposant que l'identifiant 4 du capteur 210-2 soit associé au quatrième élément du container 300-4, c'est-à-dire à l'élément 305-44, ce dernier est sélectionné. L'élément 305-44 pointe sur le premier élément du container 300-5 qui est un container automatique pour afficher séquentiellement, en boucle, le contenu multimédia de l'ensemble de ses éléments. Le dispositif d'affichage 205-1 affiche donc le contenu multimédia des éléments 305-51 à 305-510, c'est dire une étoile qui clignote. En outre l'élément 305-56 étant associé à une action relative à l'actionneur 215-2, ce dernier est commandé (par exemple selon une commande de type bascule ou de type marche/arrêt), et ceci se répète à chaque fois que l'élément est sélectionné dans l'affichage séquentiel en boucle. L'élément 305-22 étant toujours sélectionné, l'affichage des dispositifs d'affichage 205-2 et 205-3 ne change pas.

La **figure 10** illustre l'affichage des dispositifs d'affichage 205-1, 205-2 et 205-3 de la figure 2 après qu'un troisième événement ait été détecté par le module 410 associé au dispositif d'affichage 205-2. Comme décrit précédemment, le troisième événement est associé à l'élément 405-23 du container 400-2. Le dispositif d'affichage 205-2 affiche donc le contenu multimédia de l'élément 405-23. Par ailleurs, le container 400-2 ayant le même identifiant que les containers 300-2 et 500-2, les éléments 305-23 et 505-23 sont également sélectionnés. L'élément 305-23 pointe sur le premier élément du container 300-3 qui est un container associé au capteur 210-1. L'état de ce dernier est donc déterminé pour sélectionner l'élément de ce container correspondant à l'état du capteur. Il est supposé ici que le capteur 210-1, de type curseur, est dans sa position initiale correspondant au premier élément du container. L'élément 305-31 est donc sélectionné et son contenu multimédia est affiché sur le dispositif d'affichage 205-1. Par ailleurs, l'élément 505-23 étant sélectionné, le contenu multimédia de cet élément est affiché par le dispositif d'affichage 205-3.

La **figure 11** illustre l'affichage des dispositifs d'affichage 205-1, 205-2 et 205-3 de la figure 2 lorsque le curseur du capteur 210-1 associé au dispositif d'affichage 205-1 est déplacé de sa position initiale à sa position finale. La modification de la position du curseur du capteur 210-1 de sa position initiale à sa position finale a pour effet de sélectionner les éléments 305-31 à 305-310, les uns après les autres. Le contenu multimédia de ces éléments est affiché de façon séquentielle, faisant monter le rond sur l'écran. Lorsque le rond atteint le haut de l'écran (i.e. lorsque le capteur est dans sa position finale), c'est-à-dire lorsque l'élément 305-310 est sélectionné, l'action associée à cet élément est déclenchée, i.e. l'actionneur 215-1 est commandé. L'élément 305-23 étant toujours sélectionné, l'affichage des dispositifs d'affichage 205-2 et 205-3 ne change pas.

L'exemple de fonctionnement d'un prototype fonctionnel illustré par les figures 3 à5 et 6 à 11 montre la facilité de programmation d'un prototype fonctionnel à l'aide de containers et d'éléments ainsi que le large spectre d'applications offert par ce mécanisme. Les interactions sont matérielles avec les capteurs physiques ou tactiles et les actionneurs et visuelles avec les dispositifs d'affichage. Comme illustré, le fonctionnement des dispositifs d'affichage est indépendant d'un dispositif d'affichage à un autre, à l'exception des échanges de données relatifs à la sélection d'éléments de containers dont l'identifiant est partagé entre plusieurs dispositifs d'affichage, ce qui simplifie la programmation du prototype fonctionnel et permet un ajout ou un retrait facile de dispositifs d'affichage.

Par ailleurs, des changements peuvent être apportés facilement au prototype fonctionnel, par exemple en l'arrêtant, en modifiant des éléments, des containers, des liens entre des états de capteurs et des éléments et/ou des liens entre des actions et des éléments et en ré-exécutant le prototype fonctionnel. Il est ainsi possible d'améliorer le prototype fonctionnel de façon itérative.

La **figure 12a** illustre un premier exemple de container 1200 associé à un capteur 1205 de type lecteur RFID. Selon cet exemple, le container comprend dix éléments, tous associés à un état du capteur. Le premier élément du container correspond ici à l'état selon lequel une étiquette radiofréquence ayant un premier identifiant (ID₁) est détectée à proximité du capteur 1205. De façon similaire, chacun des huit éléments suivants du container est ici associé à un identifiant particulier (ID₂ à ID₉) d'une étiquette radiofréquence, un élément étant sélectionné lorsque qu'une étiquette radiofréquence ayant l'identifiant correspondant est détectée par le capteur. En d'autres termes, lorsqu'une étiquette radiofréquence 1210 ayant un identifiant IDᵢ est approchée à proximité du capteur 1205, l'élément *i* du container est sélectionné. Il est observé ici que si, dans un souci de clarté, les identifiants associés aux éléments du container 1200 sont définis selon un ordre croissant (ID₁ à ID₉), tout autre ordre peut être utilisé. Le dernier élément du container 1200 est ici un élément par défaut, qui est sélectionné lorsqu'aucune étiquette radiofréquence n'est détectée à proximité du capteur 1205 ou lorsque l'identifiant d'une étiquette radiofréquence détectée à proximité du capteur 1205 ne correspond à aucun élément du container 1200.

La **figure 12b** illustre un second exemple de container 1200' associé à un capteur 1205 de type lecteur RFID. Selon cet exemple, le container comprend onze éléments, tous associés à un état du capteur. Le premier élément du container correspond ici à l'état selon lequel aucune étiquette radiofréquence n'est détectée à proximité du capteur 1205 (comme illustré avec le symbole ø). Chacun des neuf éléments suivants correspond à un identifiant d'une étiquette radiofréquence obtenu par le capteur, comme décrit en référence à la figure 12a, et le dernier élément du container est ici un élément sélectionné lorsque l'identifiant d'une étiquette radiofréquence détectée à proximité du capteur 1205 ne correspond à aucun élément du container 1200' (comme illustré avec le symbole 'infini').

La **figure 13** illustre un exemple de container 1300 associé à un capteur 1305 de type commutateur comprenant ici quatre positions (une position ouverte ø et trois positions fermées P₁, P₂ et P₃). Selon cet exemple, le container comprend quatre éléments correspondant aux quatre positions du commutateur, c'est à dire aux quatre états du capteur. Comme illustré, le premier élément est associé à la première position (P₁) du commutateur, le deuxième élément est associé à la deuxième position (P₂) du commutateur, le troisième élément est associé à la troisième position (P₃) du commutateur et le quatrième élément est associé à l'état ouvert (ø) du commutateur.

La **figure 14** illustre un exemple de container 1400 associé à un capteur 1405 de type curseur linéaire dont la position varie d'une position initiale à une position finale. Le capteur 1405 peut être un capteur physique ou un capteur logique, par exemple une représentation de capteur sur une surface tactile. Selon cet exemple, le container comprend cinq éléments correspondant à cinq ensembles différents de positions du curseur. Chaque ensemble correspond par exemple à un cinquième de la course maximum du curseur. Ainsi, par exemple, le premier élément est sélectionné lorsque le curseur se situe dans le premier cinquième de la course maximum du curseur, le deuxième élément est sélectionné lorsque le curseur se situe dans le deuxième cinquième de la course maximum du curseur et ainsi de suite.

La **figure 15** illustre un exemple de container 1500 associé à un capteur 1505 de type curseur rotatif dont la position varie d'une position initiale à une position finale. A nouveau, le capteur 1505 peut être un capteur physique ou un capteur logique, par exemple une représentation de capteur sur une surface tactile. Selon cet exemple, le container comprend douze éléments. Ils correspondent à douze ensembles différents de positions du curseur, chaque ensemble correspondant par exemple à un douzième de la course maximum du curseur. Le mécanisme de sélection d'un élément peut être similaire à celui décrit en référence à la figure 14.

La **figure 16** illustre un exemple de container 1600 associé à un capteur 1605 tactile de type trackpad ou écran tactile permettant la détection d'un geste de type balayage. Selon cet exemple, le container comprend douze éléments. La sélection d'un élément change lorsqu'un utilisateur déplace son doigt sur le capteur tactile : lorsqu'il déplace son doigt vers la droite, un élément situé immédiatement à droite de l'élément précédemment sélectionné est sélectionné et inversement. Selon la vitesse de balayage, la sélection est effectuée d'éléments voisins en éléments voisins ou en ignorant un élément sur deux, sur trois, etc. Bien entendu, le capteur 1605 peut être utilisé en lien avec tout type de gestes, avec un ou plusieurs points de contact (e.g. un ou plusieurs doigts).

Naturellement, les exemples illustrés sur les figures 12 à 16 sont donnés à titre d'illustration. Il existe de nombreuses autres configurations variant selon le nombre d'éléments, la nature du capteur, les besoins des utilisateurs, etc.

Il est observé ici qu'un capteur associé à un container peut être facilement remplacé par un autre capteur, sans modification substantielle du container concerné (la modification vise essentiellement le changement de référence du capteur, elle peut en outre comprendre l'affectation des états du capteur avec les éléments du capteur). Par exemple, le capteur 1505 associé au container 1500 peut être remplacé par le capteur 1405 de la figure 14, sans réelle modification (i.e. le capteur 1405 de type curseur linéaire contrôle l'élément sélectionné du container 1500 sur les douze éléments). Il en est de même, notamment, pour les actionneurs de même type.

La **figure 17** illustre un exemple de module de traitement de données pouvant être utilisé pour mettre en oeuvre, au moins partiellement, des modes de réalisation de l'invention. Ce dispositif peut être intégré ou associé à chaque dispositif d'affichage décrit en référence aux figures 1 à 11.

Le dispositif 1700 comporte de préférence un bus de communication 1702 auquel sont reliées :
- une unité centrale de traitement ou microprocesseur 1704 (CPU, sigle de Central Processing Unit en terminologie anglo-saxonne) ;
- une mémoire morte 1706 (ROM, acronyme de Read Only Memory en terminologie anglo-saxonne) pouvant comporter le système d'exploitation et des programmes tels que "prog", "prog1" et "prog2" ;
- une mémoire vive ou mémoire cache 1708 (RAM, acronyme de Random Access Memory en terminologie anglo-saxonne) comportant des registres adaptés à enregistrer des variables et paramètres créés et modifiés au cours de l'exécution des programmes précités ;
- une interface de communication 1710 reliée à un réseau de communication distribué 1712, par exemple un réseau de communication sans fil et/ou un réseau de communication local, l'interface étant apte à transmettre et à recevoir des données, notamment vers et depuis d'autres dispositifs ; et
- une carte graphique et une carte son ou une carte audio/vidéo 1714 reliée à un écran et des haut-parleurs 1716.

Optionnellement, le dispositif 1700 peut également disposer des éléments suivants :
- un disque dur 1718 pouvant comporter les programmes "prog", "prog1" et "prog2" précités et des données traitées ou à traiter selon l'invention ;
- une interface d'entrée / sortie 1720 à laquelle peuvent être reliés un ou plusieurs capteurs 1722, un ou plusieurs actionneurs 1724, un clavier 1726, une souris 1728 et/ou tout autre dispositif de pointage comme un crayon optique, un écran tactile, un dispositif de reconnaissance vocale, un dispositif de reconnaissance de gestes, une caméra, un microphone, un dispositif d'interface cerveau-machine (brain computing), ou une télécommande permettant à l'utilisateur d'interagir avec les programmes selon l'invention ; et/ou
- un lecteur 1730 de support amovible de stockage 1732 tel qu'une carte mémoire.

Le bus de communication permet la communication et l'interopérabilité entre les différents éléments inclus dans le dispositif 1700 ou reliés à lui. La représentation du bus n'est pas limitative et, notamment, l'unité centrale est susceptible de communiquer des instructions à tout élément du dispositif 1700 directement ou par l'intermédiaire d'un autre élément du dispositif 1700.

Le code exécutable de chaque programme permettant à l'appareil programmable de mettre en oeuvre les processus selon l'invention peut être stocké, par exemple, dans le disque dur 1718 ou en mémoire morte 1706.

Selon une variante, le code exécutable des programmes pourra être reçu par l'intermédiaire du réseau de communication 1712, via l'interface 1710, pour être stocké de façon identique à celle décrite précédemment.

De manière plus générale, le ou les programmes pourront être chargés dans un des moyens de stockage du dispositif 1700 avant d'être exécutés.

L'unité centrale 1704 va commander et diriger l'exécution des instructions ou portions de code logiciel du ou des programmes selon l'invention, instructions qui sont stockées dans le disque dur 1718 ou dans la mémoire morte 1706 ou bien dans les autres éléments de stockage précités. Lors de la mise sous tension, le ou les programmes qui sont stockés dans une mémoire non volatile, par exemple le disque dur 1718 ou la mémoire morte 1706, sont transférés dans la mémoire vive 1708 qui contient alors le code exécutable du ou des programmes selon l'invention, ainsi que des registres pour mémoriser les variables et paramètres nécessaires à la mise en oeuvre de l'invention.

En fonction du mode de réalisation choisi, certains actes, actions, évènements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

## Revendications

1. **Procédé** de prototypage fonctionnel d'un dispositif interactif dans un environnement comprenant au moins une unité de calcul, au moins un dispositif d'affichage (205) et au moins un capteur (201), le procédé comprenant :
- pour ledit au moins un dispositif d'affichage (205),
∘ obtention d'une pluralité de structures logiques, chaque structure logique comprenant un ensemble ordonné d'éléments (305), chaque élément comprenant un contenu multimédia et/ou un pointeur sélectionnant un autre élément ;
∘ association de chaque élément d'un ensemble d'éléments (305) d'une structure logique à un état d'un ensemble d'états dudit au moins un capteur (210), la détection d'un état de l'ensemble d'états sélectionnant l'élément associé ;
- exécution du prototype fonctionnel en sélectionnant un élément d'entrée d'une structure logique du au moins un dispositif d'affichage (205), utilisé pour l'initialisation dudit au moins un dispositif d'affichage, l'élément suivant l'élément d'entrée dans la structure logique étant sélectionné suite à l'initialisation dudit au moins un dispositif d'affichage, la sélection d'un élément provoquant le jeu du contenu multimédia de l'élément sélectionné si l'élément sélectionné comprend un contenu multimédia et provoquant la sélection d'un élément pointé par l'élément sélectionné si l'élément sélectionné comprend un pointeur, un seul élément pouvant être sélectionné dans une structure logique à un instant donné ;
- après arrêt du prototype fonctionnel,
∘ répétition de l'étape d'association de chaque élément d'un ensemble d'éléments (305) d'une structure logique à un état d'un ensemble d'états, dynamiquement et en fonction d'un besoin lié au prototype fonctionnel,
- en changeant l'ensemble d'éléments ou l'ensemble d'états et/ou
- en modifiant un contenu multimédia d'un élément et/ou un pointeur d'un élément, ou l'ordre d'éléments d'au moins une structure logique et
∘ répétition de l'exécution du prototype fonctionnel.

2. Procédé selon la revendication 1, comprenant en outre, pour ledit au moins un dispositif d'affichage (205), l'association d'au moins une action à au moins un élément, ladite au moins une action étant exécutée lors de la sélection dudit au moins un élément associé à ladite au moins une action.

3. Procédé selon la revendication 2, selon lequel au moins une action associée à au moins un élément est une commande d'au moins un actionneur (215).

4. Procédé selon l'une quelconque des revendications 1 à 3, comprenant en outre, pour ledit au moins un affichage (205), l'association de chaque élément d'un ensemble d'éléments (305) d'une structure logique à un événement d'un ensemble d'événements, la détection d'un événement de l'ensemble d'événements sélectionnant l'élément associé.

5. Procédé selon la revendication 4, dans un environnement comprenant une pluralité de dispositifs d'affichage (205), dans lequel un même événement est associé à plusieurs éléments de structures logiques obtenues pour des dispositifs d'affichages distincts.

6. Procédé selon l'une quelconque des revendications 1 à 5, comprenant en outre, pour ledit au moins un dispositif d'affichage (205), l'association de plusieurs éléments (305) d'une structure logique pour enchaîner automatiquement la sélection des éléments associés.

7. Procédé selon l'une quelconque des revendications 1 à 6, selon lequel chaque structure logique est associée à un niveau de profondeur, ladite pluralité de structures logiques comprenant une structure logique unique de niveau supérieur, le prototype fonctionnel étant exécuté en sélectionnant un élément de la structure logique de niveau supérieur du au moins un dispositif d'affichage.

8. Procédé selon la revendication 7, selon lequel lorsque des éléments de plusieurs structures logiques sont sélectionnés et qu'au moins certains des éléments sélectionnés comprennent un contenu multimédia, les contenus multimédias des éléments sélectionnés sont combinés selon l'ordre de profondeur des structures logiques auxquelles appartiennent les éléments sélectionnés.

9. Procédé selon la revendication 7 ou la revendication 8, dépendante directement ou indirectement de la revendication 2, selon lequel, lors de l'exécution du prototype fonctionnel, des actions à exécuter sont exécutées selon l'ordre de profondeur des structures logiques des éléments auxquels sont associées les actions à exécuter.

10. Procédé selon l'une quelconque des revendications 1 à 9, selon lequel ledit environnement comprend une pluralité de dispositifs d'affichage (205), au moins une structure logique obtenue pour un premier dispositif d'affichage ayant un même identifiant qu'au moins une structure logique obtenue pour un second dispositif d'affichage, la sélection d'un élément dans ladite au moins une structure logique obtenue pour ledit premier dispositif d'affichage provoquant la sélection d'un élément dans ladite au moins une structure logique obtenue pour ledit second dispositif d'affichage.

11. Procédé selon la revendication 10 comprenant en outre la transmission, d'une unité de calcul associée audit premier dispositif d'affichage à une unité de calcul associée audit second dispositif d'affichage, d'une information relative audit élément sélectionné dans ladite au moins une structure logique obtenue pour ledit premier dispositif d'affichage.

12. Programme d'ordinateur comprenant des instructions pour la mise en œuvre de chacune des étapes du procédé selon l'une des revendications 1 à 11, lorsque ce programme est exécuté par un processeur.

13. Dispositif comprenant une unité de traitement configurée pour exécuter chacune des étapes du procédé selon l'une des revendications 1 à 11.

## Patentansprüche

1. Verfahren zur Erstellung eines funktionsfähigen Prototyps einer interaktiven Vorrichtung in einer Umgebung, die mindestens eine Recheneinheit, mindestens eine Anzeigevorrichtung (205) und mindestens einen Sensor (201) umfasst, wobei das Verfahren umfasst:
- für die mindestens eine Anzeigevorrichtung (205),
∘ Erhalten einer Vielzahl von logischen Strukturen, wobei jede logische Struktur eine geordnete Einheit von Elementen (305) umfasst, wobei jedes Element einen Multimediainhalt und/oder einen Zeiger umfasst, der ein anderes Element auswählt;
∘ Zuordnen jedes Elements einer Einheit von Elementen (305) einer logischen Struktur mit einem Zustand einer Einheit von Zuständen des mindestens einen Sensors (210), das Erkennen eines Zustands der Einheit von Zuständen, die das zugeordnete Element auswählt;
- Ausführen der Erstellung eines funktionsfähigen Prototyps durch Auswählen eines Eingangselements einer logischen Struktur der mindestens einen Anzeigevorrichtung (205), das zum Initialisieren der mindestens einen Anzeigevorrichtung verwendet wird, wobei das Element, das dem Eingangselement in der logischen Struktur folgt, nach dem Initialisieren der mindestens einen Anzeigevorrichtung ausgewählt wird, das Auswählen eines Elements, welches das Abspielen des Multimediainhalts des ausgewählten Elements bewirkt, wenn das ausgewählte Element einen Multimediainhalt umfasst, und das Auswählen eines Elements, auf das durch das ausgewählte Element gezeigt wird, wenn das ausgewählte Element einen Zeiger umfasst, wobei zu einem gegebenen Zeitpunkt nur ein Element in einer logischen Struktur ausgewählt werden kann;
- nach Anhalten des funktionsfähigen Prototyps,
∘ Wiederholen des Schritts zum Zuordnen jedes Elements einer Einheit von Elementen (305) einer logischen Struktur zu einem Zustand einer Einheit von Zuständen, dynamisch und in Abhängigkeit von einem mit dem funktionsfähigen Prototyp verbundenen Bedarf,
- durch Ändern der Einheit von Elementen oder der Einheit von Zuständen und/oder
- durch Ändern eines Multimediainhalts eines Elements und/oder eines Zeigers eines Elements oder der Reihenfolge von Elementen mindestens einer logischen Struktur und
∘ Wiederholen der Ausführung des funktionsfähigen Prototyps.

2. Verfahren nach Anspruch 1, ferner umfassend für die mindestens eine Anzeigevorrichtung (205) das Zuordnen von mindestens einer Aktion mit mindestens einem Element, wobei die mindestens eine Aktion bei der Auswahl des mindestens einen Elements ausgeführt wird, das mit der mindestens einen Aktion verbunden ist.

3. Verfahren nach Anspruch 2, wobei mindestens eine mindestens einem Element zugeordnete Aktion eine Steuerung von mindestens einem Stellglied (215) ist.

4. Verfahren nach einem der Ansprüche 1 bis 3, ferner umfassend, für die mindestens eine Anzeige (205), das Zuordnen jedes Elements einer Gruppe von Elementen (305) einer logischen Struktur mit einem Ereignis einer Gruppe von Ereignissen, das Erkennen eines Ereignisses der Gruppe von Ereignissen, das das zugeordnete Element auswählt.

5. Verfahren nach Anspruch 4, in einer Umgebung, die eine Vielzahl von Anzeigevorrichtungen (205) umfasst, wobei ein und dasselbe Ereignis mit mehreren Elementen logischer Strukturen verbunden ist, die für separate Anzeigevorrichtungen erhalten werden.

6. Verfahren nach einem der Ansprüche 1 bis 5, ferner umfassend für die mindestens eine Anzeigevorrichtung (205) die Kombination mehrerer Elemente (305) einer logischen Struktur, um die Auswahl der zugeordneten Elemente automatisch zu verketten.

7. Verfahren nach einem der Ansprüche 1 bis 6, wobei jede logische Struktur einer Tiefenebene zugeordnet ist, wobei die Vielzahl von logischen Strukturen eine eindeutige logische Struktur einer übergeordneten Ebene umfasst, wobei der funktionsfähige Prototyp durch Auswahl eines Elements der logischen Struktur der übergeordneten Ebene der mindestens einen Anzeigevorrichtung ausgeführt wird.

8. Verfahren nach Anspruch 7, wobei, wenn Elemente mehrerer logischer Strukturen ausgewählt sind und mindestens einige der ausgewählten Elemente einen Multimediainhalt umfassen, die Multimediainhalte der ausgewählten Elemente entsprechend der Tiefenordnung der logischen Strukturen, denen die ausgewählten Elemente angehören, kombiniert werden.

9. Verfahren nach Anspruch 7 oder Anspruch 8, das direkt oder indirekt von Anspruch 2 abhängig ist, wobei bei der Ausführung des funktionsfähigen Prototyps auszuführende Aktionen in der Reihenfolge der Tiefe der logischen Strukturen der Elemente ausgeführt werden, denen die auszuführenden Aktionen zugeordnet sind.

10. Verfahren nach einem der Ansprüche 1 bis 9, wobei die Umgebung eine Vielzahl von Anzeigevorrichtungen (205) umfasst, wobei mindestens eine für eine erste Anzeigevorrichtung erhaltene logische Struktur eine gleiche Kennung wie mindestens eine für eine zweite Anzeigevorrichtung erhaltene logische Struktur aufweist, wobei das Auswählen eines Elements in der mindestens für die erste Anzeigevorrichtung erhaltenen logischen Struktur das Auswählen eines Elements in der mindestens für die zweite Anzeigevorrichtung erhaltenen logischen Struktur bewirkt.

11. Verfahren nach Anspruch 10, das weiter das Übertragen von einer Recheneinheit, die der ersten Anzeigevorrichtung zugeordnet ist, zu einer Recheneinheit, die der zweiten Anzeigevorrichtung zugeordnet ist, von Informationen über das in der mindestens einen für die erste Anzeigevorrichtung erhaltenen logischen Struktur ausgewählte Element umfasst.

12. Computerprogramm, das Anweisungen zur Durchführung jedes Verfahrensschritts nach einem der Ansprüche 1 bis 11 umfasst, wenn dieses Programm von einem Prozessor ausgeführt wird.

13. Vorrichtung, die eine Verarbeitungseinheit umfasst, die konfiguriert ist, um jeden der Schritte des Verfahrens nach einem der Ansprüche 1 bis 11 auszuführen.

## Claims

1. Method for functionally prototyping an interactive device in an environment comprising at least one computing unit, at least one display device (205) and at least one sensor (201), the method comprising:
- for said at least one display device (205),
∘ obtaining a plurality of logical structures, each logical structure comprising an ordered set of elements (305), each element comprising multimedia content and/or a pointer selecting another element;
∘ associating each element of a set of elements (305) of a logical structure with a state of a set of states of said at least one sensor (210), the detection of a state of the set of states selecting the associated element;
- executing the functional prototype by selecting an input element of a logical structure of the at least one display device (205), used for initialising said at least one display device, the element following the input element in the logical structure being selected following the initialization of said at least one display device, selecting an element causing the playback of the multimedia content of the selected element if the selected element comprises multimedia content and causing the selection of an element pointed at by the selected element if the selected element comprises a pointer, a single element being selectable in a logical structure at a given time;
- after stopping the functional prototype,
∘ repeating the step of associating each element of a set of elements (305) of a logical structure with a state of a set of states, dynamically and according to a need related to the functional prototype,
- by changing the set of elements or the set of states and/or
- by modifying a multimedia content of an element and/or a pointer of an element, or the order of elements of at least one logical structure and
∘ repeating the execution of the functional prototype.

2. Method according to claim 1, further comprising, for said at least one display device (205), associating at least one action with at least one element, said at least one action being executed upon selection of said at least one element associated with said at least one action.

3. Method according to claim 2, according to which at least one action associated with at least one element is a command of at least one actuator (215).

4. Method according to any one of claims 1 to 3, further comprising, for said at least one display (205), associating each element of a set of elements (305) of a logical structure with an event of a set of events, the detection of an event of the set of events selecting the associated element.

5. Method according to claim 4, in an environment comprising a plurality of display devices (205), wherein the same event is associated with several logical structure elements obtained for separate display devices.

6. Method according to any one of claims 1 to 5, further comprising, for said at least one display device (205), the association of several elements (305) of a logical structure in order to automatically interlink the selection of the associated elements.

7. Method according to any one of claims 1 to 6, according to which each logical structure is associated with a depth level, said plurality of logical structures comprising a single higher level logical structure, the functional prototype being executed by selecting an element of the higher level logical structure of the at least one display device.

8. The method according to claim 7, according to which, when elements of several logical structures are selected and at least some of the selected elements comprise multimedia content, the multimedia contents of the selected elements are combined according to the order of depth of the logical structures to which the selected elements belong.

9. Method according to claim 7 or claim 8, directly or indirectly dependent on claim 2, according to which, during the execution of the functional prototype, actions to be executed are executed according to the order of depth of the logical structures of the elements with which the actions to be executed are associated.

10. Method according to any one of claims 1 to 9, according to which said environment comprises a plurality of display devices (205), at least one logical structure obtained for a first display device having the same identifier as at least one logical structure obtained for a second display device, selecting an element in said at least one logical structure obtained for said first display device causing the selection of an element in said at least one logical structure obtained for said second display device.

11. Method according to claim 10 further comprising transmitting, from a computing unit associated with said first display device to a computing unit associated with said second display device, information relating to said element selected in said at least one logical structure obtained for said first display device.

12. Computer program comprising instructions for implementing each of the steps of the method according to one of claims 1 to 11, when this program is executed by a processor.

13. Device comprising a processing unit configured to execute each of the steps of the method according to any one of claims 1 to 11.
